# EUROPEAN PATENT SPECIFICATION

(11) **EP 2 209 867 B1**
(45) Date of publication and mention of the grant of the patent: **25.04.2018**
(21) Application number: 08842249.8
(22) Date of filing: 21.10.2008
(51) Int. Cl.: C09K 3/14, C08J 5/14, F16D 65/02, F16D 69/02, F16D 69/00

(54) **FRICTION MATERIAL COATED WITH PARTICLES AND SATURATED WITH ELASTIC RESIN**
MIT TEILCHEN ÜBERZOGENES UND MIT ELASTOHARZ GETRÄNKTES REIBUNGSMATERIAL
MATÉRIAU DE FRICTION RECOUVERT DE PARTICULES ET SATURÉ PAR UNE RÉSINE ÉLASTIQUE

(30) Priority: 25.10.2007 US 982447 P
(43) Date of publication of application: 28.07.2010
(73) Proprietor: Borgwarner Inc., Auburn Hills, MI 48326 (US)
(72) Inventor: CIUPAK, Brian, R., Gaines MI 48436 (US); DONG, Feng, Rochester Hills MI 48306 (US); NEWCOMB, Timothy, P., Rochester Hills MI 48306 (US)
(74) Representative: Leckel, Ulf
(86) International application number: PCT/US2008/080617
(87) International publication number: WO 2009/055371

(56) References cited:
- EP-A1- 1 391 629
- EP-A1- 1 394 438
- EP-A1- 1 621 790
- EP-A1- 1 621 791
- EP-A2- 1 517 062
- US-A1- 2004 043 243
- US-A1- 2007 011 951
- US-A1- 2007 117 881

## Description

This Application claims the benefit of United States Provisional Application No. 60/982,447 filed October 25, 2007.

### TECHNICAL FIELD

The field to which the disclosure generally relates includes a product including a friction material including an elastic resin and methods of making and using the same.

### BACKGROUND

Friction materials may be used in a variety of applications including, but not limited to, clutch plates, transmission bands, brake shoes, synchronizer rings, friction disk and system plates.

EP 1 517 062 A2 discloses a non-asbestos, non-metallic material comprising a first layer of a base material and a second layer of friction modifying particles that at least partially coat the base material.

EP 1 391 629 A1 discloses a friction material which includes a base material, at least one type of resin material, and at least one type of nanoparticle-sized friction modifying particle.

EP 1 394 438 A1 discloses a friction material having a first or lower layer comprising a fibrous base material and a second or top layer comprising at least one type of friction modifying particles.

EP 1 621 790 A1 discloses a porous friction material having a first or lower layer comprising a porous base material and a second or top layer comprising at least one type of friction modifying particles which comprises nanoparticles of friction modifying materials.

### SUMMARY OF EXEMPLARY EMBODIMENTS OF THE INVENTION

Object of the present invention is a product comprising a friction material comprising a base material layer and a surface layer on the top surface of the base material layer, the surface layer comprising a blend of friction modifying particles and fibers or at least one type of friction modifying particle, the blend of friction modifying particles and fibers or the at least one type of friction modifying particle being bound to the base material layer with a resin, wherein the resin includes a polymer having an aliphatic segment; wherein the aliphatic segment is at least 3 single bonded carbon atoms long or longer and wherein the aliphatic segment is 40 % to 100 % by weight of the polymer; wherein the resin includes a repeating unit, which is 3-n-pentadecadienyl phenol or α-Eleostearic acid; or wherein the resin includes a binder that is an epoxy phenolic resin which contains 5 to 50 percent, by weight, of an epoxy containing alkane chains; or wherein the resin includes a binder that is a silicone or modified silicone resin; and wherein the base material layer comprises fibers, and the base material layer having a plurality of voids therein, and wherein the size of the voids ranges from 0.5 µm to 20 µm.

It should be understood that the detailed description and specific examples, while disclosing exemplary embodiments of the invention, are intended for purposes of illustration only and are not intended to limit the scope of the invention.

### BRIEF DESCRIPTION OF THE DRAWINGS

Exemplary embodiments of the invention will become more fully understood from the detailed description and the accompanying drawings, wherein:

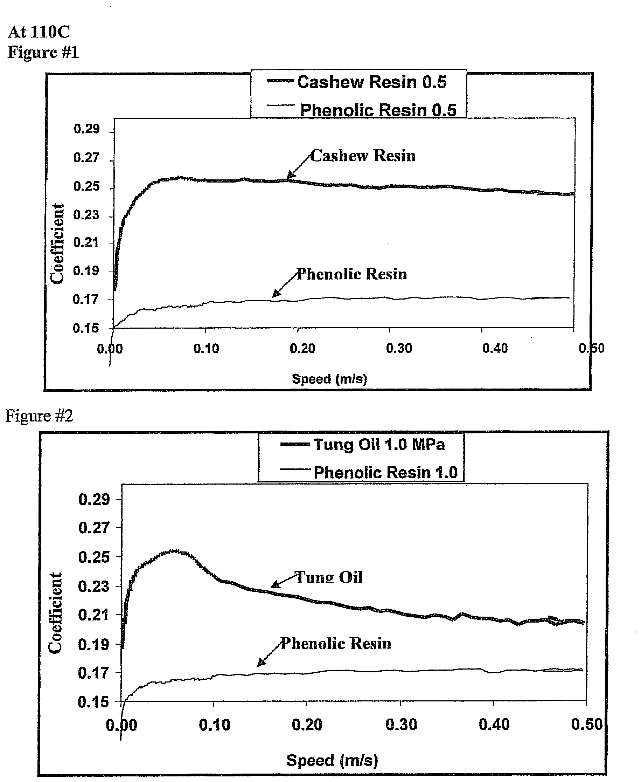

FIG. 1 is a graph of the coefficient of friction at 110C and various speeds and 0.5mPa lining pressure for a friction material including an elastic resin according to one embodiment of the invention shown by the thick lines and in comparison to a friction material including a control resin (rigid phenolic resin) shown by the thin line.
FIG. 2 is a graph of the coefficient of friction at 110C and various speeds and 1.0 mPa lining pressures for a friction material including an elastic resin according to one embodiment of the invention shown by the thick lines and in comparison to a friction material including a control resin (rigid phenolic resin) shown by the thin line.

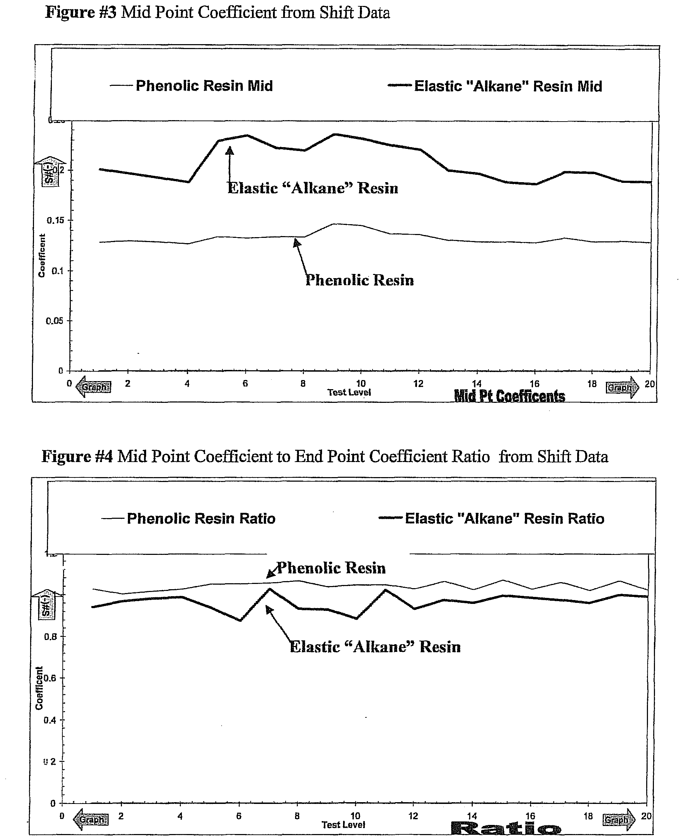

FIG 3 is a chart of the midpoint coefficient of friction for a standard SAE clutch shifting test procedure for a friction material including an elastic resin according to one embodiment of the invention
FIG 4 is a chart of the midpoint coefficient to end point coefficient ratio of friction for a standard SAE clutch shifting test procedure for a friction material including a control resin (rigid phenolic resin)

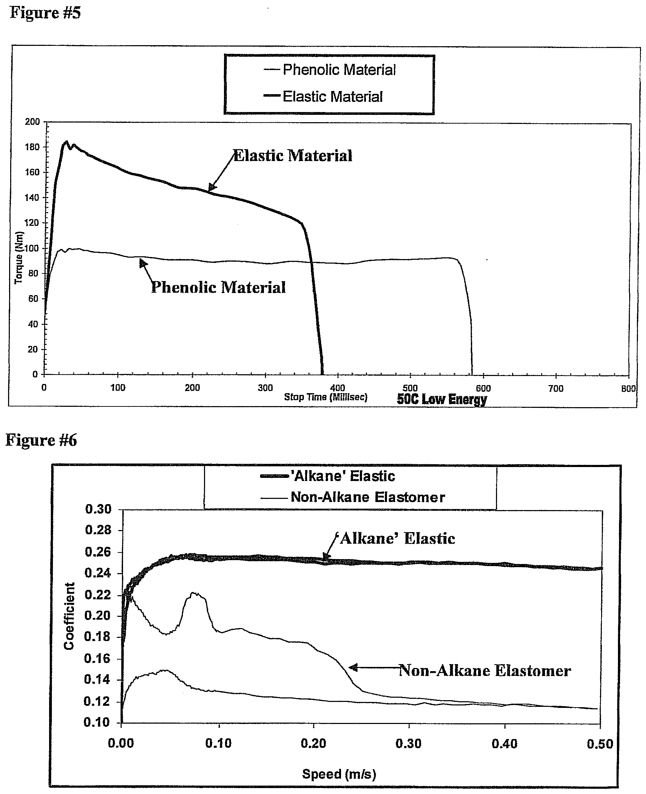

FIG 5 is a chart of the torque engagement of a standard SAE clutch shifting test at 50C oil temperature and 0.5 Mpa lining pressure for a friction material including an elastic resin according to one embodiment of the invention shown by the thick lines and in comparison to a friction material including a control resin (rigid phenolic resin) shown by the thin line.
FIG. 6 is a graph of the coefficient of friction at 110C and various speeds and 0.5mPa lining pressure for a friction material including an elastic resin according to one embodiment of the invention shown by the thick lines and in comparison to a friction material including a flexible elastomer resin without described chemistry shown by the thin line.

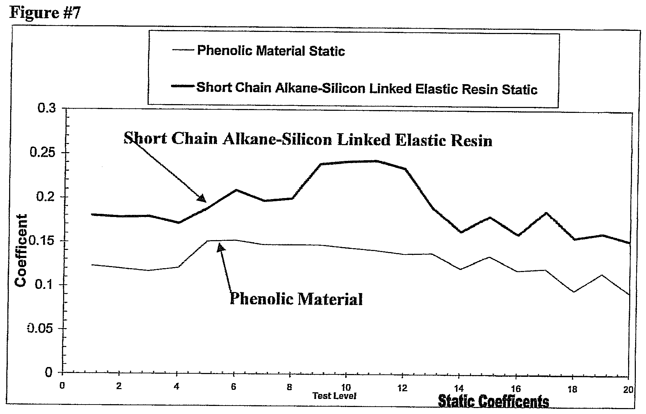

FIG. 7 is a graph of the static coefficient of friction a from a standard SAE clutch shifting test procedure for a friction material including an elastic resin composed of a 3 carbon alkane chains chemically linked with silicon atoms to form carbon-silicon polymer, according to one embodiment of the invention

### DETAILED DESCRIPTION OF EXEMPLARY EMBODIMENTS

The following description of the embodiment(s) is merely exemplary in nature and is in no way intended to limit the invention, its application, or uses.

One embodiment of the invention includes a product including a friction material including a resin including a polymer having an aliphatic segment, and wherein the aliphatic segment is 40% to 100% by of the polymer. The aliphatic segment is at least 3 single bonded carbon atoms long or longer. The aliphatic segment may be branched or cross-linked but must be contain carbon-carbon bonds. Other portions of the polymer may include double or cyclic bonds however the aromatic content of the resin polymer must be less than 60% and preferably less than 40%. The polymer may have non-carbon atoms attached to the carbon-carbon backbone without losing performance. In one embodiment, the resin is a natural resin found in cashew nut shell liquid, tung oil, linseed oil, or other drying oils. In another embodiment, the resin is a synthetic resin found in cross-linked rubbers, halogenated, oxygenated or nitrided rubbers, silicon, siloxane, or epoxy resins with sufficient carbon chains. Another embodiment of the invention the resin is a resin modified to include or increase the amount of carbon-carbon bonds or the configuration of the carbon-carbon backbone.

A product including a friction. material having a first layer comprising of a base material and at least one type of resin material that can be a first resin, or a resin. Also including a second layer on a top surface of the base material that may include of at least one type of friction modifying particle and a resin blend. The friction modifying particles have at least one type of particles having an average diameter between 1 and 100 microns, preferably less than 40 micron. The second layer has an average thickness of 1 to 200 microns, such that the top layer has permeability lower than the first layer. The base material includes a plurality of fibers and a resin component binding the fibers together, the resin component including an elastic resin or blend of an elastic resin and a regular resin.

A friction material for use in a variety of applications including, but not limited to, clutch plates, transmission bands, brake shoes, synchronizer rings, friction disk and system plates. The friction material base layer may include a plurality of fibers, which may be woven, or non-woven (randomly dispersed) and a resin component binding the fibers. The resin component may include a resin or a blend of a resin and a regular resin one embodiment of the invention the resin may be a natural or synthetic resin found in any one of cashew nut shell oil, cross-linked rubber, halogenated, oxygenated or nitrided rubbers, butyl rubber, tung oil, linseed oil, or other drying oils. The resin may have 50% to 100% by weight of an alkane chemical group consisting of or attached to the base polymer. The resin may be present weight of an alkane chemical group consisting of or attached to the base in about 10 - 60 wt% of the total weight of the friction material. In one embodiment, the resin component consists entirely of one The resin, and wherein no other resin is present.

One embodiment of the invention includes a friction material including a resin on -modified resin to increase asperity contact and static coefficients of friction while maintaining good µm-V curve shape. The use of a resin allows for increased asperity deformation hence increasing true contact area and coefficient of friction. The resin may include a repeating unit, which is a modified phenolic group such as 3-n-pentadecadienyl phenols or a linear alkane group like α-Eleostearic acid. Suitable resins are available commercially or may be custom synthesized.

FIG. 1 is a graph of the coefficient of friction at 110C and various speeds and 0.5mPa lining pressure for a friction material including an elastic resin according to one embodiment of the invention shown by the thick lines and in comparison to a friction material including a control resin (rigid phenolic resin) shown by the thin line.

FIG. 2 is a graph of the coefficient of friction at 110C and various speeds and 1.0 mPa lining pressures for a friction material including an elastic resin according to one embodiment of the invention shown by the thick lines and in comparison to a friction material including a control resin (rigid phenolic resin) shown by the thin line.

FIG 3 is a chart of the midpoint coefficient of friction for a standard SAE clutch shifting test procedure for a friction material including an elastic resin according to one embodiment of the invention

FIG 4 is a chart of the midpoint coefficient to end point coefficient ratio of friction for a standard SAE clutch shifting test procedure for a friction material including a control resin (rigid phenolic resin)

FIG 5 is a chart of the torque engagement of a standard SAE clutch shifting test at 50C oil temperature and 0.5 Mpa lining pressure for a friction material including a resin according to one embodiment of the invention shown by the thick lines and in comparison to a friction material including a control resin (rigid phenolic resin) shown by the thin line.

FIG. 6 is a graph of the coefficient of friction at 110C and various speeds and 0.5mPa lining pressure for a friction material including a resin according to one embodiment of the invention shown by the thick lines and in comparison to a friction material including a flexible elastomer resin without described chemistry shown by the thin line.

FIG. 7 is a graph of the static coefficient of friction a from a standard SAE clutch shifting test procedure for a friction material including a resin composed of a 3 carbon alkane chains chemically linked with silicon atoms to form carbon-silicon polymer, according to one embodiment of the invention.

A friction material including a resin may include one or more of the following components.

The following description of the embodiment(s) is merely exemplary in nature and is in no way intended to limit the invention, its application, or uses.

One embodiment of the invention may include a product comprising: a friction material comprising a plurality of fibers having a fiber diameter ranging from about 1 to about 20 micrometers, the fibers comprising ceramic or mineral fibers and reinforcing fibers to add strength, the reinforcing fibers being fibrillated with a Canadian Standard Freeness greater than 300. The fibers may be woven or non-woven.

One example of a formulation for the primary layer of a fibrous base material includes about 10 to about 30%, by weight, of a less fibrillated aramid fiber; about 2 to about 10%, by weight, homoacrylic fiber about 10 to about 35%, by weight, of activated carbon particles; about 5 to about 20%, by weight, cotton fibers, about 2 to about 20%, by weight, carbon fibers; and, about 10 to about 35%, by weight of a filler material.

### Aramid Fibers and Aramid Fiber Substitutes

It has been discovered that at least a substantial portion of an relative expense aramid fiber of a friction material may be replaced by a relative inexpensive polymer fiber, particularly when combined with other fibers described herein, without significantly diminishing the performance of the friction material, if at all. In one embodiment of the aramid, fiber substitute comprises a homopolymer. In one embodiment, the homopolymer comprises a homoarcylic polymer. In one embodiment, the homopolymer is derived from only acrylonitrile. In one embodiment of the invention the friction material includes an aramid fiber present in less than 25 weight percent of the friction material and the aramid fiber substitute is present in an amount ranging from 18 weight percent to 20 weight percent of the fiber material. The frictional material may include additional components including those described in the following exemplary embodiments.

In various embodiments of the invention the use of less fibrillated aramid fibers, homoacrylic fibers, and carbon fibers in a fibrous base, material improves the friction material's ability to withstand high temperatures. Less fibrillated aramid, fibers and homoacrylic fibers generally have few fibrils attached to a core fiber. The use of the less fibrillated fibers provides a friction material having a more porous structure; i.e., there are larger pores than if a typical fibrillated fiber is used. The porous structure is generally defined by the pore size and liquid permeability. In certain embodiments, the fibrous base material defines pores ranging in mean average size from about 2.0 to about 25 microns in diameter. In certain embodiments, the mean pore size ranges from about 2.5 to about 8 microns in diameter and the friction material had readily available air voids of at least about 50% and, in certain embodiments, at least about 60% or higher, and in certain embodiments up to and including about 85%.

Also, in certain embodiments, it is desired that the aramid fibers and homoacrylic fibers have a length ranging from about 0.5 to about 10 mm and a Canadian Standard Freeness (CSF) of greater than about 300. In certain embodiments, it is also desired to use less fibrillated aramid fibers and homoacrylic fibers which have a CSF of about 450 to about 550; about 530 and greater; and, in other certain embodiments, about 580-650. In contrast, more fibrillated fibers, such as aramid pulp or homoacrylic pulp, have a freeness (CSF) of about 285-290.

The "Canadian Standard Freeness" (T227 om-85) means that the degree of fibrillation of fibers can be described as the measurement of freeness of the fibers. The CSF test is an empirical procedure, which gives an arbitrary measure of the rate at which a suspension of three grams of fibers in one liter of water may be drained. Therefore, the less fibrillated fibers and homoacrylic fibers have higher freeness or higher rate of drainage of fluid from the friction material than more fibrillated fibers. Friction materials comprising the fibers having a CSF ranging from about 430-650 (and in certain embodiments preferably about 580-640, or preferably about 620-640), provide superior friction performance and have better material properties than friction materials containing conventionally more fibrillated fibers. The longer fiber length, together with the high Canadian freeness, provides a friction material with high strength, high porosity, and good wear resistance. The less fibrillated fibers (CSF about 530-about 650) have especially good long-term durability and stable coefficients of friction.

When the base material has a higher mean pore diameter and fluid permeability, the friction material is more likely to run cooler or with less heat generated in a transmission due to better automatic transmission fluid flow throughout the porous structure of the friction material. During operation of a transmission system, the fluid tends, over time, to breakdown and form "oil deposits", especially at high temperatures. These "oil deposits" decrease the pore openings. Therefore, when the friction material initially starts with larger pores, there are more open pores remaining during the useful life of the friction material.

One embodiment of the invention includes 2.0 wt % of a cotton fiber 16.5 wt % of a aramid fiber, 10.0 wt% of a homoacrylic polymer, 17.5 wt% of a mineral fiber, 5.0 wt% of a carbon fiber, 27.0 wt% silica diatom, and 22.0 wt% of graphite particles. Optionally other additives may be included.

In certain embodiments, the friction material can comprise a fibrous base material comprising, by weight percent: about 10 to about 30 wt % fibrillated aramid fibers, about 2 to about 20 wt % of an aramid fiber substitute, for example, fibrillated homoacrylic fibers, about 10 to about 30 wt % silica filler material, about 10 to about 20 wt % graphite, and about 5 to about 20 wt % small diameter sized petroleum pitch-based carbon fibers.

Various base materials are useful in the friction material of the present invention, including, for example, non-asbestos base materials comprising, for example, fabric materials, woven and/or nonwoven materials. Suitable base materials include, for example, fibers and fillers. The fibers can be organic fibers, inorganic fibers and carbon fibers. The organic fibers can be aramid fibers, such as fibrillated and/or nonfibrillated aramid fibers, acrylic fibers, polyester fibers, nylon fibers, polyamide fibers, cotton/cellulose fibers and the like. The fillers can be, for example, silica, diatomaceous earth, graphite, alumina, cashew dust and the like. In other embodiments, the base material can comprise woven materials, non-woven materials, and paper materials.

In certain embodiments, the friction material comprises a base material that has a plurality of voids or interstices therein. The size of the voids in the base material can range from about 0.5 µm to about 20 µm.

In certain embodiments, the base material preferably has a void volume of about 50 to about 60% such that the base material is considered "dense" as compared to a "porous" woven material. In certain embodiments, the base material can be any suitable material such as a fibrous base material. The friction material further comprises a resin material, which at least partially fills the voids in the base material. The resin material is uniformly dispersed throughout the thickness of the base material.

In certain embodiments, the base material comprises a fibrous base material where less fibrillated fibers and carbon fibers are used in the fibrous base material to provide a desirable pore structure to the friction material. The fiber geometry not only provides increased thermal resistance, but also provides delamination resistance and squawk or noise resistance. In addition, in certain embodiments, the presence of the carbon fibers and carbon particles aids in the fibrous base material in increasing the thermal resistance, maintaining a steady coefficient of friction, and increasing the squeal resistance. A relatively low amount of cotton fibers in the fibrous base material can be included to improve the friction material's clutch "break-in" characteristics.

In various embodiments of the invention, the fibers used for the friction material have a tensile modulus greater than 150 GPa; ranging from about 200 to about 300 GPa; or about 250 to about 300 GPa. Additional details regarding select components of the friction material is provided hereafter.

The friction material may also include the following additional components.

### Carbon Based Fibers

In one embodiment of the invention, the friction material may include a carbon-based fiber, for example, a petroleum pitch-based carbon fiber comprising a solvated pitch which has a fluid temperature of at least 40°C lower than the melting point of the same pitch in the non-solvated state. The petroleum pitch-based fibers are capable of being heated to carbonization temperatures without melting.

In other embodiments, the petroleum pitch-based carbon fibers can be used as a second layer on a fibrous base material that includes further petroleum pitch-based carbon fibers in the fibrous base material.

In yet another embodiment, the petroleum pitch-based carbon fibers are used as a secondary or top layer on an outer surface of a fibrous base material that has no petroleum pitch-based carbon fibers in the fibrous base material. The friction materials having the petroleum pitch-based carbon fiber increases the break away coefficient of friction, thus increasing the holding capacity of the friction material.

In certain embodiments, the petroleum pitch-based carbon fiber can be used as a top or secondary layer on an inexpensive porous material comprising, for example cotton and cellulose filler material. The small diameter fibers may be present in a typical formulation such as in the range of about 15 to about 20%, by weight.

In certain embodiments, the carbon fiber is made from a solvated isotropic pitch, which has a fluid temperature of at least about 400°C lower, and often 200°C or more, than the melting point of the same pitch in the non-solvated state. Fibers made from this solvated isotropic pitch have desirable improved stabilization characteristics such that the fibers can be heated to carbonization temperatures without melting. Further, any mesophase present in the carbon fibers is not highly elongated by shear forces associated with the formation of the carbon fibers. Further, petroleum pitch-based carbon fibers may have about 5 to about 40% solvent, by weight, where the pitch fiber is un-meltable upon removable of the solvent from the fiber.

The petroleum pitch-based carbon fibers may have a softening point in excess of 300°C and preferably greater than 350°C such that the fibers are capable of being subjected to a stabilization process at temperatures greater than a fibrous spinning temperature.

The term "pitch" generally refers to by-products in the production of natural asphalt petroleum pitches and heavy oil obtained as a by-product in naphtha cracking industry and pitches of high carbon content obtained from coal. Petroleum pitch generally refers to the residual carbonaceous material obtained from the catalytic and/or thermal cracking of petroleum distillates or residues. Solvated pitches generally contain between about 5 to about 40% by weight of solvent in the pitch and have a fluid temperature lower than the melting point of a pitch component when not associated with solvent. Typically, the fluid temperature is lower than about 40°C. The fluid temperature for a solvated pitch is generally determined in the industry to be the temperature at which the viscosity of 6000 poise is registered upon cooling the solvated pitch at 1°C per minute from a temperature in excess of its melting point. The solvent content refers to a value determined by weight loss on vacuum separation of the solvent. In one embodiment of the invention, the fiber consisting essentially of carbon is present in about 10 to about 20% by weight of the friction material. In one embodiment the carbon, based fiber is a fiber comprising graphite.

### Mineral Based Fibers

In one embodiment of the invention, the friction material may include mineral fibers. The mineral fibers may have a relatively small diameter. These fibers may be made from vitreous melt, such as rock, slag, glass or other mineral melts. The melt is generally formed by blending rocks or minerals to give the desired analysis. The mineral composition often has an analysis, as oxides, which includes at least 32% SiO₂, below 30% Al₂O₃ and at least 10% CaO.

In one embodiment of the invention, the mineral fibers include engineered mineral fibers having a fiber diameter ranging from 5 to 10 micrometers. The mineral fibers may be used to produce friction materials having larger pores and demonstrate better material properties as shown by the following measurements.

| Sample | Porosity= % | Median Pore Diameter (Volume)= µm | Bulk Density at 0.42 psia g/mL | Apparent (skeletal) Density= g/mL | Total Intrusion Volume= mL/g | Threshold Pressure: psia |
|---|---|---|---|---|---|---|
| Control | 60.17 | 5.80 | 0.6768 | 1.6990 | 0.8889 | 5.47 |
| BW | 67.16 | 12.04 | 0.5749 | 1.7503 | 1.1682 | 11.78 |
| BW | 63.68 | 10.28 | 0.5935 | 1.6340 | 1.0729 | 6.07 |

Typically, small diameter mineral fibers may be used in the friction material according to one embodiment of the invention and may have the following properties.

| Parameter | Ranges | Actual |
|---|---|---|
| Mineral Fiber diameter (um) | Less than 20 | 5-10 |
| Mineral Fiber Length (mm) | 0.05 to 6 | 0.2-0.7 |
| Mineral Fiber modulus (Gpa) | | |
| Fiber(all)/filler(diatom) ratio | 0.8-9 | 71/19 - 3.74 |
| Filler (diatom) range | 10-50 | 19 |
| Surface treatment | Silane, Cationic | |
| Max short (%) | | 0.20% |

An engineered mineral fiber used in another embodiment had the following properties: treated with surfactant for good water dispersion designed for wet paper process (gasket application) fiber diameter: <10 µm; Length: 650+-150 µm.

Another engineered mineral fiber used in another embodiment of the invention had the following properties: treated with silane coupling agent for good bonding to phenolic resin designed for brake application short fiber length for easy mixing (no drawings) fiber diameter: <10µm; Length 230+-50 µm.

The fiber diameter of the small diameter mineral fibers may in various embodiments range from 5 to 10 micrometers, or about 5 micrometers to 7 micrometers. The tensile modulus of the small diameter fibers may range from 200 to 300 GPa or 250 to 300 GPa in selective embodiments. In one embodiment, the mineral fiber may be present in about 5 to about 30 % by weight of the friction material.

In one embodiment the mineral fiber may include SiO₂ at 38 %wt -43 %wt, Al₂O₃ at 18 %wt - 23 %wt, CaO+MgO at 23 %wt- 28 %wt, FeO at 4.5 %wt 8 %wt, K₂O+Na₂O at 4.5 %wt, and other ingredients up to 6 %wt. In another embodiment the mineral fibber may include SiO₂ at 34 to 52 %wt, Al₂O₃ at 5 to 15 %wt, CaO at 20 to 43 %wt, MgO at 4 to 14%wt, Na₂O at 0 to 1 %wt, K₂O at 0 to 2 %wt, TiO₂ at 0 to 1 %wt, FeO₂ at 0 to 2 %wt, and other ingredients at 0 to 7 %wt.

### Other Fibers

While the preferred other fibers are carbon fibers, aramid fibers, cellulose fibers, ceramic fibers and silica fibers, other inorganic fibers may be employed. Other useful inorganic filaments for use in various embodiments of the invention may include glass fibers such as fibers formed from quartz, magnesia alumuniosilicate, non-alkaline aluminoborosilicate, soda borosilicate, soda silicate, soda lim-aluminosiliate, lead silicate, non-alkaline lead boroalumina, non-alkaline barium boroalumina, non-alkaline zinc boroalumina, non-alkaline iron aluminosilicate, cadmium borate, alumina fibers, and the like. In some embodiments, the other fibers may have a fiber diameter larger than 20 micrometers.

In one embodiment, small diameter fibers may be present on an outer surface of the fibrous base material as the friction material. The friction material typically is for use in engagement with an opposing friction surface. The fibrous base material thus, in contact with the opposing friction surface during the engagement of the friction material with the opposing friction surface. The fibers also may be present in the opposing friction surface. The wet friction material also may comprise a plurality of fibrous base materials with the small diameter fibers being present in any of the layers of the plurality.

In certain embodiments, cotton fiber is added to the fibrous base material to give the fibrous material higher coefficients of friction. In certain embodiments, about 5 to about 20%, and, in certain embodiments, about 10% cotton can also be added to the fibrous base material.

### Additives

Various types of friction modifying particles may be useful in the friction material. Useful friction modifying particles include silica particles. Other embodiments may have friction-modifying particles such as resin powders such as phenolic resins; silicone resins epoxy resins and mixtures thereof. Still other embodiments may include partial and/or fully carbonized carbon powders and/or particles and mixtures thereof; and mixtures of such friction modifying particles. In certain embodiments as described herein, silica particles such as diatomaceous earth, and/or silicon dioxide may be useful. The silica particles are inexpensive inorganic materials that bond strongly to the base material. The silica particles provide high coefficients of friction to the friction material. The silica particles also provide the base material with a smooth friction surface and may provide a good "shift feel" and a friction characteristic to the friction material such that any "shudder" is minimized.

In one embodiment, the fiber/filler ratio ranges from 0.8/1 to 1.4/1. In a specific embodiment, the fiber/filler ratio is 1.09/1.

Typically, the wet friction material includes friction-modifying particles deposited on a surface of the base material. Preferably, the particles are synthetic graphite. Inorganic fillers also may be used. The inorganic filler varies broadly and generally is diatomaceous earth, clay, wollastonite, silica, carbonate; vermiculite, mica, silica oxides, iron oxides, aluminum oxides, titanium oxides and the like; silica nitrides, iron nitrides, aluminum nitrides, titanium nitrides and the like; and, silica carbides, iron carbides, aluminum carbides, titanium carbides and the like. The particles may have a Mohs hardness of at least 4.5.

### Additional Binders And Impregnating Agents

Although a resin is preferred, additional binders and impregnating agents may be included in the friction material as follows. The resin component may also include additional resins including, but is not limited to, phenolic or phenolic-based resins. The saturant material may comprise about 45 to about 65 parts, by weight, per 100 parts, by weight, of the friction material. The phenolic-based resins which include in the resin blend other modifying ingredients, such as epoxy, butadiene, silicone, tung oil, benzene, cashew nut oil and the like. In the phenolic-modified resins, the phenolic resin may be generally present at about 50% or greater by weight (excluding any solvents present) of the resin blend. However, it has been found that friction materials, can be improved when the mixture includes a resin blend containing about 5 to about 80%, by weight, and for certain purposes, about 15 to about 55%, and about 15 to about 25%, by weight, of silicone resin based on the weight of the silicone-phenolic mixture (excluding solvents and other processing acids).

The friction material may include an epoxy phenolic or novalac resin which contains about 5 to about 50 percent, by weight, and about 10 to about 35 percent, by weight, of an epoxy containing alkane chains with the remainder being (excluding solvents and other processing aids) phenolic or novalac resin.

The binder may be a phenolic or modified phenolic resin, a silicone or modified silicone resin, or a blend of a phenolic or modified phenolic resin with a silicone or modified silicone resins. The binder is an epoxy-novalac resin. The wet friction material may be used as, for example but not limited to, a clutch facing or a brake lining. The wet friction material comprises 10 to 70 weight percent fibers, 10 to 70 weight percent inorganic filler, and 20 to 60 weight percent binder.

In still other embodiments of the invention, organo-silane binders may be used on the fibers of this invention. Most organofunctional alkoxysilanes have specific technical applications such as adhesion promoters and surface modification agents. For example, 3-aminopropyltrialkoxysilanes, 3-aminopropylmethyldialkoxysilanes, N-aminoethyl-3-aminopropyltrimethoxy-silane. N-aminoethyl-3-aminopropyl-meththyldiamethoxysilane, 3-mercaptopropyltrimethorxy-silane and 3-methaoxypropyltrimethoxysilane are used as adhesion promoters or as surface modification agents. Compounds such as 3-aminoisobutyltrialkoxysilanes, 3-aminoisobutylmethyldiakloxysilanes, N-(2-aminoethyl)-3-amino-2-methylpropyl-alkoxysilanes and N-(2-aminoethyl) 3-amino-2-methylpropylmethyidialkoxysilanes are also known.

In another embodiment, the friction material may be made with a phenol-formaldehyde resin as a curable binder. The phenol-formaldehyde resin contains both phenol and formaldehyde in a molar ratio of 1:2.8 and more, such as up to 1:5. In general, the quantity of formaldehyde is over the stoichiometric amount such as in the ratio 1:3.1 to 1:5, for instance 1:3.4 and contains at least a three carbon-carbon chain. Other compounds such as ammonia and sugar may be used in preparing the phenolic binder.

The friction material also may be impregnated using different resin systems. At least one phenolic resin, at least one modified phenolic-based resin; at least one silicone resin, at least one epoxy resin, and/or combinations of the above may be used. An epoxy novalac resin blended or mixed with a phenolic resin in compatible solvents is useful.

The high-pressure oiled environment may be greater than 5MPa and more preferably greater than 6MPa. The friction modifying particles preferably have a Mohs hardness of at least 4.5. In one embodiment, the ratio of small diameter fibers to fillers may range from 0.5/1 to 2.0/1, and in another embodiment, the ratio may range from 0.8/1 to 1.4/1. The fibrous base material also includes a binder. In one embodiment, the fibrous base material comprises 20 to 60 weight percent of the small diameter fibers, and in another embodiment, the fibrous base material comprises 30 to 50 weight percent of the small diameter fibers.

The resin mixture may comprise desired amounts of the resin and the friction modifying particles such that the target pick up of resin by the fibrous base material ranges from about 25 to about 70%, in other embodiments, from about 45 to about 200%, and, in certain embodiments, about 40 to at least 65%, by weight, total elastic resin. After the fibrous base material is saturated with the resin, the fibrous base material is cured (in certain embodiments for about 1/2 hour) at temperatures ranging between 200-400°C to cure the resin binder and form the friction material. The final thickness of the friction material depends on the initial thickness of the fibrous base material.

The friction material according to one embodiment of the invention may include a layer of friction modifying particles on a top surface of a fibrous base material provides a friction material with good anti-shudder characteristics, high resistance, high coefficient of friction, high durability, good wear resistance and improved break-in characteristics.

The friction material further comprises a top, or second, layer of the irregular or geometrical shaped friction modifying particles on a first, or top, surface of the base material. The presence of the friction modifying materials as a top layer on the base material provides the friction material with many advantageous properties, including good oil retention and surface oil flow properties.

Various fillers are also useful in the primary layer of the fibrous base material of the present invention. In particular, silica fillers, such as diatomaceous earth, are useful. However, it is contemplated that other types of fillers are suitable for use in the present invention and that the choice of filler depends on the particular requirements of the friction material.

## Claims

1. A product comprising a friction material comprising a base material layer and a surface layer on the top surface of the base material layer,
the surface layer comprising a blend of friction modifying particles and fibers or at least one type of friction modifying particle, the blend of friction modifying particles and fibers or the at least one type of friction modifying particle being bound to the base material layer with a resin,
wherein the resin includes a polymer having an aliphatic segment,
wherein the aliphatic segment is at least 3 single bonded carbon atoms long or longer and wherein the aliphatic segment is 40 % to 100 % by weight of the polymer;
wherein the resin includes a repeating unit, which is 3-n-pentadecadienyl phenol or α-Eleostearic acid; or
wherein the resin includes a binder that is an epoxy phenolic resin which contains 5 to 50 percent, by weight, of an epoxy containing alkane chains; or
wherein the resin includes a binder that is a silicone or modified silicone resin;
and wherein the base material layer comprises fibers, and the base material layer having a plurality of voids therein, and wherein the size of the voids ranges from 0.5 µm to 20 µm.

2. A product as set forth in claim 1 wherein the resin comprises a polymer having an aliphatic segment being 3 single bonded carbon atoms long or longer, wherein the aliphatic segment is branched or cross-linked.

3. A product as set forth in claim 2 wherein the polymer further comprises double bonded carbon atoms or one or more cyclic carbon groups.

4. A product as set forth in claim 2 wherein the polymer further comprises one or more cyclic carbon groups, and wherein the cyclic carbon groups are less than 60 weight percent of the polymer.

5. A product as set forth in claim 2 wherein the aliphatic segment includes a non-carbon atom attached to one of the carbon atoms.

6. A product as set forth in claim 1 wherein the resin comprises a natural resin comprising at least one of cashew nut shell liquid, tung oil, linseed oil or other drying oils, or a natural resin modified to increase the amount of number of aliphatic segments.

7. A product as set forth in claim 1 wherein the resin comprises an epoxy novalac resin cured with a 3-15 carbon chain di-acid anhydride.

8. A product as set forth in claim 1 wherein the resin comprises a silicon or silioxane resin containing at least 50% carbon, preferably in a short chain.

9. A product as set forth in claim 1 wherein the resin is present in 10-60 wt% of the total weight of the friction material.

10. A product as set forth in claim 1 wherein the fibers in the base material comprise at least one of carbon fibers, aramid fibers, mineral fibers, or cotton fibers.

11. A product as set forth in claim 1 wherein the friction modifying particle comprises silica, diatomaceous earth, graphite, activated carbon, minerals, resin, or metal particles.

12. A product as set forth in claim 1 wherein the base material layer has a void volume of 50 to 60 percent of the base material layer.

## Patentansprüche

1. Produkt, umfassend ein Reibungsmaterial, das eine Basismaterialschicht und eine Oberflächenschicht auf der oberen Oberfläche der Basismaterialschicht umfasst,
wobei die Oberflächenschicht ein Gemisch von reibungsmodifizierenden Partikeln und Fasern oder wenigstens einen Typ von reibungsmodifizierenden Partikeln umfasst, wobei das Gemisch von reibungsmodifizierenden Partikeln und Fasern oder der wenigstens einen Typ von reibungsmodifizierenden Partikeln mit einem Harz an die Basismaterialschicht gebunden ist,
wobei das Harz ein Polymer mit einem aliphatischen Segment umfasst,
wobei das aliphatische Segment wenigstens 3 einfachgebundene Kohlenstoffatome lang oder länger ist und wobei das aliphatische Segment 40 Gew.-% bis 100 Gew.-%des Polymers bildet;
wobei das Harz eine Wiederholungseinheit umfasst, die 3-n-Pentadecadienylphenol oder α-Eleostearinsäure ist; oder
wobei das Harz ein Bindemittel umfasst, das ein Epoxyphenolharz ist, das 5 bis 50 Gewichtsprozent an Epoxy-enthaltenden Alkanketten umfasst; oder
wobei das Harz ein Bindemittel umfasst, das ein Silicon oder ein modifiziertes Siliconharz ist;
und wobei die Basismaterialschicht Fasern umfasst und die Basismaterialschicht eine Vielzahl von Hohlräumen darin aufweist und wobei die Größe der Hohlräume in dem Bereich von 0,5 µm bis 20 µm liegt.

2. Produkt gemäß Anspruch 1, wobei das Harz ein Polymer mit einem aliphatischen Segment umfasst, das 3 einfachgebundene Kohlenstoffatome lang oder länger ist, wobei das aliphatische Segment verzweigt oder vernetzt ist.

3. Produkt gemäß Anspruch 2, wobei das Polymer ferner doppelgebundene Kohlenstoffatome oder eine oder mehrere cyclische Kohlenstoffgruppen umfasst.

4. Produkt gemäß Anspruch 2, wobei das Polymer ferner eine oder mehrere cyclische Kohlenstoffgruppen umfasst und wobei die cyclischen Kohlenstoffgruppen weniger als 60 Gewichtsprozent des Polymers bilden.

5. Produkt gemäß Anspruch 2, wobei das aliphatische Segment ein Nichtkohlenstoffatom umfasst, das an eines der Kohlenstoffatome gebunden ist.

6. Produkt gemäß Anspruch 1, wobei das Harz ein natürliches Harz umfasst, das wenigstens eines von Cashewnussschalen-Flüssigkeit, Tungöl, Leinsamenöl oder andere trocknende Öle umfasst, oder ein natürliches Harz, das zum Erhöhen der Anzahlmenge aliphatischer Segmente modifiziert ist.

7. Produkt gemäß Anspruch 1, wobei das Harz ein Epoxidnovolakharz umfasst, das mit einem 3-15-Kohlenstoffkette-Disäureanhydrid gehärtet ist.

8. Produkt gemäß Anspruch 1, wobei das Harz ein Silicon- oder Siloxanharz umfasst, das wenigstens 50 % Kohlenstoff, vorzugsweise in einer kurzen Kette, enthält.

9. Produkt gemäß Anspruch 1, wobei das Harz in einer Menge von 10 bis 60 Gew.-% des Gesamtgewichts des Reibungsmaterials vorliegt.

10. Produkt gemäß Anspruch 1, wobei die Fasern in dem Basismaterial Kohlefasern, Aramidfasern, Mineralfasern und/oder Baumwollfasern umfassen.

11. Produkt gemäß Anspruch 1, wobei das reibungsmodifizierende Partikel Siliciumdioxid-, Diatomeenerde-, Graphit-, Aktivkohle-, Mineral-, Harz- oder Metallpartikel umfasst.

12. Produkt gemäß Anspruch 1, wobei die Basismaterialschicht ein Hohlraumvolumen von 50 bis 60 Prozent der Basismaterialschicht aufweist.

## Revendications

1. Produit comprenant un matériau de frottement comprenant une couche de matériau de base et une couche de surface sur la surface supérieure de la couche de matériau de base,
la couche de surface comprenant un mélange de particules modifiant le frottement et de fibres ou au moins un type de particule modifiant le frottement, le mélange de particules modifiant le frottement et de fibres ou l'au moins un type de particule modifiant le frottement étant lié à la couche de matériau de base avec une résine,
dans lequel la résine comprend un polymère ayant un segment aliphatique,
dans lequel le segment aliphatique est d'au moins 3 atomes de carbone liés par simple liaison de longueur ou plus long et dans lequel le segment aliphatique constitue 40 % à 100 % en poids du polymère ;
dans lequel la résine comprend un motif de répétition, qui est le 3-n-pentadécadiénylphénol ou l'acide α-éleostéarique ; ou
dans lequel la résine comprend un liant qui est une résine époxy phénolique qui contient 5 à 50 pour cent, en poids, d'un époxy contenant des chaînes d'alcane ; ou
dans lequel la résine comprend un liant qui est une résine silicone ou silicone modifiée ;
et dans lequel la couche de matériau de base comprend des fibres, et la couche de matériau de base comportant une pluralité de vides dans celui-ci, et dans lequel la taille des vides est dans la plage de 0,5 µm à 20 µm.

2. Produit selon la revendication 1 dans lequel la résine comprend un polymère comportant un segment aliphatique étant de 3 atomes de carbone liés par simple liaison de longueur ou plus long, dans lequel le segment aliphatique est ramifié ou réticulé.

3. Produit selon la revendication 2 dans lequel le polymère comprend en outre des atomes de carbone liés par double liaison ou un ou plusieurs groupes carbonés cycliques.

4. Produit selon la revendication 2 dans lequel le polymère comprend en outre un ou plusieurs groupes carbonés cycliques,
et dans lequel les groupes carbonés cycliques constituent moins de 60 pour cent en poids du polymère.

5. Produit selon la revendication 2 dans lequel le segment aliphatique comprend un atome non-carbone lié à un des atomes de carbone.

6. Produit selon la revendication 1 dans lequel la résine comprend une résine naturelle comprenant au moins l'un parmi un liquide de coque de noix de cajou, l'huile de bois de Chine, l'huile de lin ou d'autres huiles de séchage, ou une résine naturelle modifiée pour augmenter le nombre de segments aliphatiques.

7. Produit selon la revendication 1 dans lequel la résine comprend une résine novalaque époxy durcie avec un anhydride de diacide à chaîne de 3 à 15 carbones.

8. Produit selon la revendication 1 dans lequel la résine comprend une résine silicone ou silioxane contenant au moins 50 % de carbone, de préférence dans une chaîne courte.

9. Produit selon la revendication 1 dans lequel la résine est présente à 10 à 60 % en poids du poids total du matériau de frottement.

10. Produit selon la revendication 1 dans lequel les fibres dans le matériau de base comprennent au moins l'une parmi des fibres de carbone, des fibres d'aramide, des fibres minérales ou des fibres de coton.

11. Produit selon la revendication 1 dans lequel la particule modifiant le frottement comprend des particules de silice, de terre de diatomée, de graphite, de charbon actif, de minéraux, de résine ou de métal.

12. Produit selon la revendication 1 dans lequel la couche de matériau de base comporte un volume de vide de 50 à 60 pour cent de la couche de matériau de base.
